# EUROPÄISCHE PATENTSCHRIFT

(11) **EP 0 900 252 B1**
(45) Veröffentlichungstag und Bekanntmachung des Hinweises auf die Patenterteilung: **04.12.2002**
(21) Anmeldenummer: 97923864.9
(22) Anmeldetag: 09.05.1997
(51) Int. Cl.: C08K 5/34, C08L 23/00

(54) **POLYOLEFINMASSEN MIT VERBESSERTER VERKLEBBARKEIT**
POLYOLEFINE MATERIALS WITH IMPROVED ADHESIVITY
MATIERES POLYOLEFINIQUES A ADHESIVITE AMELIOREE

(30) Priorität: 20.05.1996 DE 19620266
(43) Veröffentlichungstag der Anmeldung: 10.03.1999
(73) Patentinhaber: Cognis Deutschland GmbH & Co. KG, 40589 Düsseldorf (DE)
(72) Erfinder: BIRNBRICH, Paul, D-42719 Solingen (DE); FISCHER, Herbert, D-40229 Düsseldorf (DE); GORZINSKI, Manfred, D-40227 Düsseldorf (DE); HUVER, Thomas, D-40625 Düsseldorf (DE)
(86) Internationale Anmeldenummer: EP9702395
(87) Internationale Veröffentlichungsnummer: WO97044386

(56) Entgegenhaltungen:
- EP-A- 0 295 930
- EP-A- 0 485 598
- EP-A- 0 540 180
- WO-A-94/15981
- FR-A- 2 656 620
- US-A- 3 862 265
- US-A- 3 953 655
- US-A- 4 001 172
- US-A- 4 178 280
- US-A- 4 785 034
- US-A- 5 037 867
- US-A- 5 268 114
- US-A- 5 561 178

## Beschreibung

### Gebiet der Erfindung

Die Erfindung betrifft Polyolefine mit verbesserter Verklebbarkeit gegenüber beispielsweise Cyanacrylatklebern, die eingearbeitete Polymerisationsinitiatoren, insbesondere sterisch gehinderte Basen wie Diazabicyclo[5.4.0]undec-7-en (DBU), und 1,5-Diazabicyclo[4.3.0]non-5-en (DBN) enthalten. Weiterhin betrifft die Erfindung ein Verfahren zur Verbesserung der Verklebbarkeit von Polyolefinen, indem beispielsweise während der Extrusion oder Injektion Polymerisationsinitiatoren in die Polyolefinmasse eingearbeitet werden.

### Stand der Technik

Während Kunststoffe auf der Basis von Polyolefinen wie Polyethylen oder Polypropylen aufgrund ihres günstigen Preises und ihrer hervorragenden Materialeigenschaften weite Verbreitung bei der Herstellung von Gebrauchsgütern gefunden haben, weisen sie doch in der Regel bei der Verarbeitung ein Manko auf, das schon den Gegenstand zahlreicher Untersuchungen darstellte. Aus der geringen Polarität, der in der Regel lediglich aus Kohlenwasserstoffen bestehenden Makromoleküle, resultiert eine Werkstoffoberfläche mit geringer Oberflächenenergie.

Es ist bekannt, daß Formteile und Folien aus synthetischem Kunststoff, insbesondere aus Kunststoffen, die unter die oben erwähnte Gruppe der Polylefine mit unpolarer Oberfläche fallen, nur schwer schützenden, dekorativen oder informativen Oberflächenveränderungen wie beispielsweise Lackieren, Verkleben oder Bedrucken zugänglich sind. In der Regel muß der jeweilige Formkörper hierzu einem oder mehreren Vorbehandlungsschritten unterzogen werden, welche üblicherweise zu einer Veränderung der Oberflächenstruktur führen.
Dazu zählt beispielsweise die Vorbehandlung des jeweiligen Kunststoffs, insbesondere von Polyethylen oder Polypropylen, mit chlorierten Polyolefinen. Solche Vorbehandlungen sind teuer, erfordern einen separaten Fertigungsschritt und erhöhen die Herstellungskosten fiir das Endprodukt.

Um beispielsweise die Haftung von üblichen Polyurethanbeschichtungen auf Polyolefinwerkstoffen zu erhöhen, werden die Oberflächen der Formteile durch Plasmabehandlung oxidativ polarisiert. Diese Form der Oberflächenbehandlung ist jedoch in Abhängigkeit von der Objektgeometrie nicht immer erfolgreich, da besonders unregelmäßig geformte Werkstücke nur schwer einer gleichmäßigen Plasmakonzentration auszusetzen sind, was zu ungleichmäßiger Veränderung der Oberfläche führt. Daraus resultieren unregelmäßig strukturierte Lackfilme, die neben einem unzulänglichen Erscheinungsbild in der Regel auch nicht über eine hinreichende Stabilität verfügen und daher den qualitativen Anforderungen an das Werkstück nicht genügen.

Weitere Versuche zur Verbesserung der Oberflächenpolarität der Polyolefine wurden unternommen, indem beispielsweise versucht wurde, Polypropylen mit ungesättigten Carbonsäuren oder Anhydriden zu pfropfen. Hierzu wurde versucht durch Peroxide auf der Polymerkette Initiatorstellen für eine radikalische Polymerisation zu erzeugen, an welchen dann die Säuren oder Säureanhydride angepfropft werden konnten. Auf diese Weise konnte jedoch lediglich eine beschränkte Menge an polaren Gruppen in das Polypropylen eingebracht werden, da die oxidative Veränderung der Polymerkette drastische Einbußen im Hinblick auf die Stabilität des Werkstücks zur Folge hatte.

Zur Verbesserung von Polyolefinen hinsichtlich ihrer Oberflächeneigenschaften schlägt die EP-A1 311 723 vor, in das Polyolefin ein modifiziertes Polypropylenharz einzuarbeiten, welches mit ungesättigten Dicarbonsäuren gepfropft wurde.

Insbesondere die für den Anwender attraktive Klasse der sogenannten "Sekundenkleber" (die nachfolgend auch einfach als Klebstoffe bezeichnet werden) kam bislang in Verbindung mit Polyolefinen für einen Einsatz nicht infrage, da zum einen die Haftung des in der Regel überwiegend aus Cyanacrylat-Monomeren bestehenden Klebstoffs nur unzureichend war und zum anderen der Klebstoff nur langsam aushärtete.

Die a-Cyanacrylatklebstoffe haben im Bereich der Industrieklebstoffe in den letzten Jahren zunehmend große Bedeutung erlangt. Neben der in der Regel weitgehend einkomponentigen, lösungsmittelfreien Formulierung dieser Klebstoffe verfügen sie über eine außergewöhnliche Härtungsgeschwindigkeit, die zum Teil im Bereich weniger Sekunden liegt. Je nach Formulierung können die dünnflüssigen Klebstoffe Spalte geringster Dimension ausfüllen und so für vollflächige Klebeverbindungen zwischen den unterschiedlichsten Substraten sorgen. Voraussetzung für eine solche adhäsive Verbindung ist allerdings, daß die Oberfläche der zu verbindenden Werkstoffe Polymerisationsinitiatoren in ausreichender Zahl zur Verfügung stellt, um das Aushärten des Klebstoffs einzuleiten.
In der Regel findet man auf Substraten mit polarer Oberfläche Molekülreste mit freien Elektronenpaaren und/oder Wassermoleküle, die dazu in der Lage sind, die Polymerisation des Klebstoffs zu initiieren. Fehlen diese Initiatoren, so kann der Klebstoff nicht zu einer dauerhaften Verbindung zwischen den Substraten aushärten. Es wurden Versuche unternommen, diesen Nachteil durch sogenanntes "Primern" auszugleichen, d.h. Haftvermittler auf die Oberfläche des Polyolefins aufzutragen.

So beschreibt beispielsweise die DE-A1 43 16 585 die Verbesserung der Hafteigenschaften von Polyolefinen gegenüber wässrigen Dispersionsklebstoffen, indem eine wässrige Copolymerisat-Dispersion basierend auf Vinylacetat und Ethylen auf die Kunststoffoberfläche aufgetragen wird.

Die DD-PS 50 947 beschreibt in ihrer Einleitung, daß Versuche, die Oberflächeneigenschaften von Polyolefinen durch Beimischung vergleichsweise niedermolekularer Zusätze wie Fettsäureamide oder Kondensationsprodukte aus Alkylenoxiden und Fettalkoholen zu modifizieren, dauerhaft reduzierte Minderungen der mechanischen Eigenschaften der so verbundenen Werkstoffe zur Folge hatten.

Die DE-A1 40 17 801 beschreibt die Verwendung von lmidazolinderivaten in Primern, die zur Verbesserung der Verklebbarkeit von Polyolefinen auf deren Oberfläche aufgetragen werden.

Die WO 88/10289 schlägt die Verwendung sterisch gehinderter Basen wie beispielsweise Diazabicyclo(5.4.0)undec-7-en (DBU) zum Primern der Oberfläche von Polyolefinen und daraus hergestellten Werkstoffen vor.

Die bislang beschriebenen Anstrengungen zur Oberflächenveränderung der Polyolefine weisen allerdings eine Reihe von Nachteilen auf, die bislang nicht lösbar schienen. Entweder konnte eine dauerhaft feste Verklebung der Kunststoffe mit den bezüglich ihrer Anwendungseigenschaften und ihrer dauerhaften mechanischen Verbindungen besonders vorteilhaften Cyanacrylatklebstoffen nicht ermöglicht werden, oder das zusätzlich in den Produktionsprozess zu integrierende Verfahren zur Verbesserung der Oberflächeneigenschaften verteuerte den Werkstoff drastisch und war unbequem anzuwenden.

### Beschreibung der Erfindung

Ziel der vorliegenden Erfindung ist es, Polyolefine zur Verfügung zu stellen, deren Oberfläche dergestalt modifiziert ist, daß der Einsatz sogenannter "Sekundenkleber", in der Regel auf Basis von überwiegend Cyanacrylat-Monomeren, zu deren Verkleben mit den unterschiedlichsten Substraten möglich wird. Insbesondere soll dieser Effekt erreicht werden, ohne die mechanischen Eigenschaften des Polyolefins nachteilig zu verändern. Hierzu ist es wünschenswert oder sogar notwendig, daß die Oberflächenmodifizierung tatsächlich nur einen Einfluß auf die Oberfläche und die direkt darunter liegenden Schichten der Werkstücks ausübt und keine nachteiligen Veränderungen der inneren Struktur verursacht.

Es ist weiterhin das Ziel dieser Erfindung, ein Verfahren zur Verfügung zu stellen, das es erlaubt, solche Polyolefine herzustellen.

Gelöst wird die der Erfindung zugrundeliegende Aufgabe überraschenderweise dadurch, daß dem Polyolefin ausgewählt aus der Gruppe Polyethylen, Polypropylen, Poly(1-buten), Polyisobutylen, Poly(4-methyl-1-penten) sowie Copolymerisaten und Mischungen der genannten Polyolefine während der Extrusion oder der Injektion, also während des Verarbeitungsschritts zum endgültigen Formkörper, ein oder mehrere Additive zugegeben werden, die in der Lage sind, das Aushärten des Klebstoffs zu initiieren. Die Additive verändern die mechanischen Eigenschaften des Polyolefins nicht, oder nur in untergeordnetem Maße und sind im Kunststoff über längere Zeit lagerstabil. Die zur Einarbeitung in den Werkstoff infragekommenden Polymerisationsinitiatoren sind mit den Polyolefinen gut vermischbar, weisen aber andererseits eine solche Polarität auf, die einen Start der Polymerisation der Klebstoffmonomere erlaubt.

Gegenstand der Erfindung sind Polyolefinmassen ausgewählt aus der Gruppe Polyethylen, Polypropylen, Poly(1-buten), Polyisobutylen, Poly(4-methyl-1-penten) sowie Copolymerisaten und Mischungen der genannten Polyolefine mit verbesserter Verklebbarkeit, erhältlich durch Vermischen von mindestens 0,001 Gew.-% -bezogen auf das Polyolefin- eines oder mehrerer Polymerisationsinitiatoren mit dem Polyolefin bei Temperaturen oberhalb des Glaspunktes, dadurch gekennzeichnet, daß die Polymerisationsinitiatoren ausgewählt sind aus der Gruppe Imidazoline, Imidazolinone und Polyazapolycyclen und in der Lage sind, die Polymerisation von Monomeren der allgemeinen Formel **(I)** 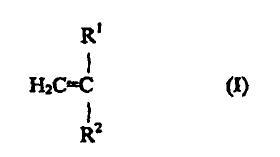 wobei R¹ für -CN oder COOR³; R² für -CN, Halogen oder COOR³ sowie R³ für Wasserstoff und/oder lineare oder verzweigte, gesättigte oder ungesättigte, gleiche oder unterschiedliche Alkylreste oder Cycloalkylreste mit 1 bis 22 C-Atomen oder Phenylreste stehen, zu initiieren. In einer bevorzugten Ausführungsform der vorliegenden Erfindung handelt es sich bei der Polymerisation um die ionische Polymerisation.

Unter den oben genannten erfindungsgemäß einzusetzenden Polyolefinen sind im Sinne der Erfindung solche Makromoleküle zu verstehen, die in der Regel durch radikalische oder durch ein Übergangsmetall katalytisch koordinierte Polymerisation von Kohlenwasserstoffen mit mindestens einer olefinisch ungesättigten Doppelbindung erhältlich sind. Hierunter sind insbesondere die Polymerisationsprodukte der kurzkettigen Olefine, wie beispielsweise Polyethylen, Polypropylen, Poly(1-buten), Polyisobutylen, oder Poly(4-methyl-1-penten) zu verstehen. Die Erfindung ist jedoch gleichermaßen auf die Polymerisationsprodukte der höheren linearen und/oder verzweigten, einfach und/oder mehrfach ungesättigten Olefine anwendbar, wobei auch Copolymerisate und/oder Mischungen der genannten Olefine und Polyolefine zu den Polyolefinen im Sinne der Erfindung zählen.

Die Polymerisation von Ethylen kann beispielsweise durch radikalische Polymerisation in Hochdruckreaktoren bei Drücken von etwa 150 bis 200 MPa und durchschnittlichen Temperaturen von etwa 200°C oder darüber durchgeführt werden. Diese Form der Reaktionsführung erzeugt aufgrund von Kettentransfermechanismen das sogenannte "Low Density Polyethylene" (LDPE) mit Dichten von etwa 920 kg/m³ und Molmassen von etwa 60.000 bis 120.000 (M_{w}).

Ebenfalls durch Hochdruckprozesse können das "Linear Low Density Polyethylene" (LLDPE) und das "Very Low Density Polyethylene" (VLDPE) hergestellt werden, Es handelt sich bei diesen Werkstoffen üblicherweise um durchscheinende, weiße, flexible Feststoffe, die sich zu durchsichtigen, unter Umständen auch leicht milchig getrübten Filmen verarbeiten lassen. In solchen Fällen, in denen völlig transparente Filme oder solche Werkstoffe, die über in vorbestimmter Weise modifizierte mechanische, elektrische oder chemische Eigenschaften verfügen, hergestellt werden sollen, hat sich die Copolymerisation des Ethylens mit Comonomeren wie beispielsweise Vinylacetat, Methylacrylat, Ethylacrylat, Methylmethacrylat, Methacrylsäure, Styrol, Vinylchlorid, Propen, Buten, Isobuten oder Hexen bewährt.

Polyethylene höherer Dichte lassen sich beispielsweise in Niederdruckreaktoren unter Verwendung von Übergangsmetallkatalysatoren erzeugen. Hierzu zählen beispielsweise die Phillips-Katalysatoren, wie mit Chromtrioxid imprägnierte Quarzpartikel, oder konzeptionell ähnliche Verbindungen wie beispielsweise Bis(triphenylsilyl)chromat oder Chromacen (Dicyclopentadienylchrom). Ebenfalls zur Gruppe der Übergangsmetallkatalysatoren zählen die Ziegler-Katalysatoren, die in der Regel Titanalkoxylate und langkettige Aluminiumalkyle beinhalten. Mit beiden Katalysatorgruppen lassen sich unverzweigte Polyethylene mit hoher Tendenz zur Kristallisation und damit hoher Dichte erzeugen. Die so erhältlichen Materialien sind üblicherweise opake, weiße Werkstoffe mit geringer Flexibilität. Der Restgehalt an Katalysatormaterial beträgt üblicherweise etwa 20 ppm. Auch die Herstellungsverfahren bei niedrigen Drücken lassen Copolymerisationen, insbesondere mit Monoolefinen und/oder nicht konjugierten Diolefinen zu.

Die verschiedenen Polyethylen-Typen LDPE, LLDPE und HDPE decken unterschiedliche Anwendungsbereiche ab. Während LDPE und LLDPE aufgrund ihrer erhöhten Flexibilität hauptsächlich in Filmen und Beschichtungen Anwendung finden, deckt das HDPE hauptsächlich strukturelle Anwendungen ab. Insbesondere die Konfektionierung aggressiver Flüssigkeiten wie beispielsweise Säuren oder Bleichmittel ist in Behältern aus HDPE möglich. Die bevorzugten Verarbeitungsformen stellen daher das Ziehen von Filmen und Rohren, die Extrusionsbeschichtung sowie die Blasformung und die Injektionsformung der Polymerschmelzen dar.

Ähnliche Anwendungsbereiche finden auch Polypropylen, Poly(1-buten) und Polyisobutylen. Insbesondere Poly(1-buten) findet aufgrund seiner aussergewöhnlichen mechanischen Eigenschaften in Materialien eine Anwendung, die über hohe Flexibilität und eine lange Lebensdauer verfügen müssen. Zu den Hochleistungspolyolefinen zählt das Poly(4-methyl-1-penten), das insbesondere aufgrund seiner Transparenz, seiner chemischen Widerstandsfähigkeit und seiner guten elektrischen Eigenschaften.

Die Erfindung löst die Aufgabe die genannten Polyolefinprodukte nicht nur auf einfache Weise untereinander, sondern auch noch mit den unterschiedlichsten davon verschiedenen Materialien durch Verklebung zu verbinden. Besonders vorteilhaft ist die Möglichkeit zur Herstellung einer solchen Klebeverbindung sogenannte "Sekundenkleber", insbesondere auf der Basis von Cyanacrylaten zu verwenden.

Die im Sinne der Erfindung einzusetzenden Klebstoffe bestehen üblicherweise aus Monomeren der allgemeinen Formel **I** 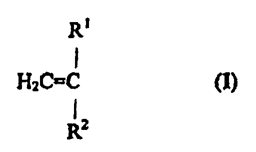 wobei R¹ für -CN oder COOR³; R² für -CN, Halogen oder COOR³ sowie R³ für Wasserstoff und/oder lineare oder verzweigte, gesättigte oder ungesättigte, gleiche oder unterschiedliche Alkylreste oder Cycloalkylreste mit 1 bis 22 C-Atomen oder Phenylreste stehen, die in der Lage sind, nach ionischen Mechanismen zu polymerisieren. Als Polymerisationsinitiatoren dienen üblicherweise schwache Basen, selbst Wasser oder Alkohole sind in der Lage die Polymerisation zu initiieren.

Insbesondere solche Monomere, die als R¹ -CN und als R² -COOR³ enthalten, wobei die Bedeutung von R³ der oben angegebenen entspricht, sind als Klebstoffe im erfindungsgemäßen Sinn geeignet.
Im einzelnen können dies beispielsweise sein: Methyl-2-cyanacrylat, Ethyl-2-cyanacrylat, n-Propyl-2-caynacrylat, Isopropyl-2-cyanacrylat, n-Butyl-2-cyanacrylat, tert-Butyl-2-cyanacrylat, sec-Butyl-2-cyanacrylat, n-Pentyl-2-cyanacrylat, Isopentyl-2-cyanacrylat, n-Hexyl-2-cyanacrylat, n-Heptyl-2-cyanacrylat, n-Octyl-2-cyanacrylat, Cyclohexyl-2-cyanacrylat, Allyl-2-cyanacrylat, Ethoxyethyl-2-cyanacrylat, Trifluorpropyl-2-cyanacrylat, 2-Chlorethyl-2-Cyanacrylat, 2,2,2-Trifluorethyl-2-Cyanacrylat und 2-Trifluormethyl-2-cyanacrylat.

Den Klebstoffmonomeren können nachfolgend beschriebene, übliche Zusatzstoffe wie beispielsweise Polymerisationsinhibitoren beigemischt sein, um die Lagerfähigkeit des Klebstoffs oder die Dauer der Polymerisationsreaktion zu verlängern. Neben der üblichen anionischen Polymerisationsroute sind die Klebstoffmonomere in der Regel auch noch zur Polymerisation nach einem radikalischen Mechanismus befähigt. Um eine Klebstoffzubereitung mit möglichst langer Haltbarkeit zu erzielen, sollten daher sowohl Inhibitoren zur Verzögerung der anionischen Polymerisation als auch zur Verhinderung der radikalischen Polymerisation enthalten sein.
Die anionische Polymerisation von Cyanacrylatmonomeren erfolgt üblicherweise nur bei pH-Werten von mehr als 5,5, als Inhibitoren eignen sich daher Lewis-Säuren. Als besonders wirksam haben sich in diesem Zusammenhang saure Gase, wie beispielsweise Schwefeldioxid erwiesen, die während des Herstellungsverfahrens der Monomeren in der Reaktionsapparatur zirkulieren. Das Vorhandensein geringer Mengen von Wasser kann unter Umständen ebenfalls zu einer Stabilisierung der Klebstoffzubereitung beitragen. Solche geringe Mengen Wasser können die Hydrolyse des Acrylsäureesters beschleunigen, so daß die zusätzliche freigesetzte Menge Acrylsäure zu einer Verringerung der Polymerisationstendenz führt.
Weitere Polymerisationsinhibitoren können beispielsweise in Form von Sulfonsäuren, Sultonen, Carbonsäuren und/oder Carbonsäureanhydriden der Klebstoffzubereitung beigemischt werden. Sulfurylchlorid, Sultone wie beispielsweise 1,8-Naphtosulton, Propansulton, Butansulton, Monochlortolylsulton oder 3,3,5,5-Tetramethylbutansulton, sowie Säureanhydride können hierbei zusätzlich stabilisierend wirken, indem gegebenenfalls einkondensierendes Wasser chemisch gebunden wird und damit nicht mehr als Polymerisationsinitiator zur Verfügung steht. Ebenso wirksam, wenngleich auch zum Teil erheblich weniger gesundheitsgefährdend, sind die Sulfonsäureanhydride oder die Sulfocarbonsäureanhydride, wie beispielsweise Carbonsäureanhydride der Sulfopropionsäure, der Sulfoisobuttersäure oder der Sulfopivalinsäure.
Ebenfalls zu einer Stabilisierung der Monomeren führt die Zugabe von Alkylsulfiden, Alkylsulfaten, Alkylsulfiten, Sulfonen, Sulfoxiden, und Mercaptanen während des Herstellungsprozesses.

Die Klebstoffe können neben den Polymerisationsinhibitoren auch Füllstoffe enthalten, die im wesentlichen zur Modifizierung der rheologischen Eigenschaften dienen, da die Cyanacrylate in der Regel dünnflüssige Materialien darstellen. Besonders im Hinblick auf die Fähigkeit zum Ausfüllen von größeren Lücken zwischen den zu verklebenden Substraten ist eine solche Modifizierung der Viskosität erwünscht. Als Füllstoffe sind beispielsweise Poly(ethyl-2-cyanacrylat), Polymethylmethacrylat (PMMA), Celluloseester, Polyvinylmethylether, Tris(hydroxyalkyl)cyanur und -phosphonsäure, Polycarbonate, Polyvinylidenfluoride, Polyethylen, Acryl-Elastomer-Copolymere oder erhitztes PMMA. Als weitere Füllstoffe zur Modifizierung der Schlagfestigkeit kommen beispielsweise Polycarbonsäuren wie 1,1,2,2-Ethylentetracarbonsäure oder Thio-di-bernsteinsäure oder Lactone wie Butyrolacton, Pivalolacton, γ-Caprolacton, Carbethoxybutyrolacton, Phthalidlacton, Cumarinlacton oder ε-Caprolacton infrage. Ebenso können feste, mineralische Füllstoffe wie Quarz, Aluminiumoxid oder Kalziumkarbonat den Klebstoffen vorteilhafte Eigenschaften verleihen. Zur Verbesserung der thermischen- und/oder Zugfestigkeitseigenschaften kann Maleinsäureanhydrid zugegeben werden, durch Abmischung mit thermisch aktivierbaren, radikalischen Polymerisationsstartern kann eine Verfestigung der Klebeverbindung durch nachträgliches Erwärmen erreicht werden. Weitere Zusätze können beispielsweise Maleinsäuredimethylester, Maleinsäurediethylester, Maleinsäuredipropylester, Malein-säuredibutylester, Maleinsäurediallylester, Fumarsäuredimethylester, Fumarsäure-diethylester, Fumarsäuredipropylester, Bis-(2-äthylhexyl)fumarat, Didodecylmaleinat sein, wobei deren Aufgabe nicht nur in einer weichmachenden Wirkung besteht, sondern auch noch eine Verringerung des Rohstoffanteils an Acrylat bewirkt. Weitere Plastifizierer können Aryl-aryl- oder Arylalkylether sein, wobei der Alkylteil üblicherweise aus einer linearen oder verzweigten, gesättigten oder ungesättigten Alkylkette mit 1 bis 22 C-Atomen besteht.

Die gesamte Klebstoffzusammensetzung enthält die Klebstoffmonomeren, wie beispielsweise Cyanacrylat, in Mengen von etwa 85 bis 99 Gew.-%, bezogen auf die gesamte Klebstoffzusammensetzung, wobei der Rest der Zusammensetzung in der Regel aus üblichen Zusatzstoffen besteht.

Zur Initiierung der Polymerisation von Monomeren gemäß Formel (**I**) sind grundsätzlich alle freien Basen geeignet, worunter beispielsweise schwache Basen wie Wasser, Alkohol, organische Amine oder anorganische und organische Phosphite ebenso zu zählen sind wie stärkere Basen wie beispielsweise das Carboxylat- oder das Hydroxy-Anion.
Die Basen initiieren sofort bei Kontakt die Polymerisation. Im Hinblick auf das Vorliegen von Polymerisationsinhibitoren ist es wünschenswert, wenn möglichst großflächiger Kontakt zwischen dem Klebstoff und dem oder den Initiatoren besteht.
Gemäß der vorliegenden Erfindung läßt sich ein optimaler Kontakt zwischen Klebstoff und dem Initiator oder den Initiatoren dann verwirklichen, wenn die Initiatoren gleichmäßig dicht auf der Oberfläche des zu verklebenden Substrates oder der zu verklebenden Substrate vorzufinden sind. Am besten wird dies durch Co-Extrusion oder durch Co-Injektion der Polyolefinkomponente, also des später zu verklebenden Werkstoffs, mit dem Polymerisationsinitiator erreicht. In der Regel erfordert dieser Vorgang noch nicht einmal einen zusätzlichen Arbeitsschritt, da üblicherweise nahezu allen Formvorgängen eine Extrusion oder ein extrusionsähnlicher Vorgang, wie beispielsweise die Injektionsformung, vorausgeht.

Das Erfordernis der Oberflächenmodifizierung ohne weiter darunter liegende Schichten des Werkstoffs zu verändern wird in Sinne der Erfindung dadurch gelöst, daß die Polymerisationsinitiatoren einen sogenannten "Ausblüheffekt" zeigen. Hierunter versteht der Fachmann die Tendenz von in eine Polyolefinmatrix eingebetteten, niedermolekularen Substanzen, an die Oberfläche des umschließenden Körpers zu wandern. Dieses Ausblühen hat zur Folge, daß der überwiegende Teil der zugesetzten Polymerisationsinitiatoren sich noch während des Extrusions- oder Injektionsvorgangs an bzw. direkt unter der Oberfläche des so erzeugten Werkstücks ansammelt. Auf diese Weise wird eine äußere Mantelschicht geschaffen, die eine hohe Dichte an Polymerisationsinitiatoren aufweist, während der innere Kern des Werkstücks weitgehend frei von Fremdstoffen ist und seine ursprünglichen Werkstoffeigenschaften beibehält. Ein solcher Effekt, läßt sich nur dann erreichen, wenn die eingesetzten Polymerisationsinitiatoren einer Beschränkung bezüglich ihrer Molmasse unterliegen. Zum einen lassen sich Gemische hochmolekularer Materialien stark unterschiedlicher Polarität nur schwer homogenisieren und zum anderen nimmt die Beweglichkeit der Polymerisationsinitiatoren in der Polyolefinschmelze mit zunehmender Molmasse stark ab. Mangelnde Homogenität, und damit schlechte Verteilung der Initiatoren in der Werkstoffoberfläche führt aber zu Zonen mit unregelmäßigen Haftungseigenschaften nach der Verklebung, während durch mangelnde Beweglichkeit die Wanderung an die Polymeroberfläche unterbunden wird. Dadurch kann die Initiatorkonzentration im Inneren der Werkstücks unter Umständen so hoch sein, daß die ursprunglichen Werkstoffeigenschaften verändert werden oder sogar im Sinne einer Qualitätsminderung verloren gehen. Es ist daher vorteilhaft die maximale Molmasse des Initiators auf etwa 2000 atomic mass units (amu) zu begrenzen. Die durch die Flüchtigkeit des Initiators bestimmte, zulässige untere Molmasse beträgt in der Regel etwa 70 amu. Vorteilhafte Ausführungsformen beinhalten insbesondere Polymerisationsinitiatoren mit Molmassen von 80 bis 1000, insbesondere etwa 90 bis 500 amu. Besonders bevorzugt ist die Verwendung von Initiatoren mit Molmassen von etwa 100 bis 300, oder insbesondere 110 bis etwa 220 amu.

Polymerisationsinitiatoren, die im Sinne der Erfindung geeignet sind, weisen in der Regel ein Stickstoff-, Sauerstoff-, Schwefel- oder ein Phosphoratom auf, wobei auch Initiatoren mit Kombinationen aus einem oder mehreren dieser Merkmale im Sinne der Erfindung wirksam sind. Die Voraussetzungen solcher Katalysatorsysteme für den erfindungsgemäßen Einsatz sind neben der Fähigkeit zur Initiierung der anionischen Polymerisation der Klebstoffmonomeren auch die Fähigkeit zur Wanderung an die Oberfläche der Werkstoffs zur Unterstützung einer festen Bindung zwischen Werkstoffoberfläche und Klebstoffmolekülen.
Insbesondere Stickstoffbasen sind hierzu geeignet, so daß Polyolefine, die Stickstoffbasen als Polymerisationsinitiatoren enthalten sowie ein Verfahren zu deren Herstellung Gegenstand der Erfindung sind.
Als besonders vorteilhaft haben sich die organischen Amine erwiesen, insbesondere solche, die in ein aromatisches, aliphatischen oder cycloaliphatisches System eingebunden sind. Hierzu zählen z.B. Substanzen wie die Trialkylamine, wobei die Alkylketten gleich oder unterschiedlich, linear oder verzweigt sowie gesättigt oder ungesättig sein können, und in der Regel jede Alkylkette von 1 bis 22 C-Atomen aufweist, die Gesamtkohlenstoffanzahl aber mindestens 6 betragen sollte.

Besonders geeignet sind solche Stickstoffbasen, deren Stickstoffatom Teil eines aliphatischen oder aromatischen Ringsystems darstellt. Auch hier ist darauf zu achten, daß die Flüchtigkeit der Initiatoren nicht zu hoch ist, da sonst die Lagerfähigkeit der erfindungsgemäß behandelten Materialien zu niedrig ist. Wenn nur kurze Zeitspannen zwischen der Herstellung des zu verklebenden Formteils oder der zu verklebenden Folie und dem eigentlichen Verklebungsschritt liegen, kann die Flüchtigkeit des Initiators aber durchaus auch höher sein.
Zur Anpassung sowohl der Polarität als auch der Flüchtigkeit können die eingesetzten Moleküle mit geeigneten Substituenten versehen werden. Geeignet sind beispielsweise lineare oder verzweigte, gesättigte oder ungesättigte Alkylgruppen mit 1 bis 24 C-Atomen, Acylgruppen mit 2 bis 24 C-Atomen, Hydroxyalkylgruppen, Alkylaminogruppen und/oder Alkylmerkaptane, wobei die Verträglichkeit zwischen Polyolefinsubstrat und Polymerisationsinitiator mit zunehmender Länge der Alkylgruppe steigt und damit die Tendenz zum "Ausblühen" des Initiators abnimmt.

Im Rahmen der Erfindung werden die Polymerisationsinhibitoren ausgewählt aus der Gruppe der Imidazoline, Imidazolinone und Polyazapolycyclen. Insbesondere die in 2-Stellung substituierten Imidazoline und/oder Imidazolinone lassen sich gut im erfindungsgemäßen Sinne in Polyolefinwerkstoffe einarbeiten. Ganz besonders bevorzugt sind jedoch Polyolefine, welche die sogenannten sterisch gehinderten Stickstoffbasen, wie sie beispielsweise 1,8-Diazabicyclo(5.4.0)undec-7-en (DBU) und/oder 1,5-Diazabicyclo-(4.3.0)non-5-en (DBN) darstellen, enthalten.

Die zur Initiierung der Klebstoffmoleküle notwendige Menge an Initiatoren kann je nach verwendetem Polyolefin und in Abhängigkeit vom eingesetzten Initiator schwanken. In der Regel kann jedoch davon augegangen werden, daß Mengen zwischen 0,005 und 20 Gew.-% - bezogen auf das Polyolefin - ausreichend in Bezug auf die Initiatorwirkung sind. Üblicherweise sind als obere Grenze 10 Gew.-% ausreichend, in der Regel reichen sogar 0,01 bis 5 Gew.-% Initiator zur Erzielung der erfindungsgemäßen Wirkung aus. In einer besonders geeigneten Ausführungsform werden Initiatormengen von 0,05 bis 1 Gew.-% eingesetzt.

Die Initiatoren können den Polyolefinwerkstoffen in beliebiger Form zugegeben werden, eine besonders gute Verteilung wird jedoch entweder durch die Verwendung flüssiger Initiatoren oder durch den Einsatz möglichst feinverteilter Feststoffe gewährleistet. Es kann vorteilhaft sein, wenn die festen Initiatoren Schmelz- oder Erweichungspunkte aufweisen, welche innerhalb des Temperaturintervalls liegen, das zur Verarbeitung des Polyolefins notwendig ist.

Die Polymerisationsinitiatoren können den Polyolefinwerkstoffen in allen Stadien der Verarbeitung nach der eigentlichen Polymerisationsreaktion zugegeben werden. Ein besonders geigneter Zeitpunkt ist die abschließende Verarbeitung der Polyolefine zu Folien oder Formkörpern, die in der Regel durch Extrusion oder ein anderes Verarbeitungsverfahren in der Schmelze bei Temperaturen oberhalb des Glaspunktes des entsprechenden Polymeren, beispielsweise durch Injektionsverfahren, erreicht wird. Die Polymerisationsinitiatoren werden bei erhöhter Temperatur zugegeben und beispielsweise co-extrudiert oder co-injiziert. Ebenfalls in erfindungsgemäßen Sinne anwendbar sind natürlich alle äquivalenten Misch- und Formverfahren.

Das erfindungsgemäße Verfahren ist unabhängig von der abschließenden Raumform des Polyolefinkörpers anwendbar. Die Einbringung des Polymerisationsinitiators ist auf allen Fertigungsstufen von der Granulierung des Polyolefins bis zur abschließenden Formgebung möglich. Einen besonders geeigneten Zeitpunkt stellt jedoch die abschließende Formgebung dar. Gegenstand der Erfindung sind daher auch Formkörper oder Folien mit Verbesserter Verklebbarkeit, die Polyolefine mit den beschriebenen Polymerisationsinitiatoren enthalten.

Ein weiterer Gegenstand der Erfindung ist die Verwendung von 2-Phenylimidazolin, 1,8-Diazabicyclo(5.4.0)undec-7-en (DBU) und/oder 1,5-Diazabicyclo(4.3.0)non-5-en (DBN) als Polymerisationsinitiatoren zur Herstellung von Polyolefinen ausgewählt aus der Gruppe Polyethylen, Polypropylen, Poly(1-buten), Polyisobutylen, Poly(4-methyl-1-penten) sowie Copolymerisaten und Mischungen der genannten Polyolefine mit verbesserter Verklebbarkeit durch Polyacrylate, erhältlich aus Monomeren der allgemeinen Formel **(I)** 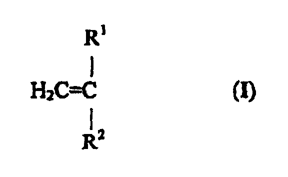 wobei R¹ für -CN oder COOR³; R² für -CN, Halogen oder COOR³ sowie R³ für Wasserstoff und/oder lineare oder verzweigte, gesättigte oder ungesättigte, gleiche oder unterschiedliche Alkylreste oder Cycloalkylreste mit 1 bis 22 C-Atomen oder Phenylreste stehen, dadurch gekennzeichnet, daß die Polymerisationsinitiatoren und die Polyolefine bei Temperaturen oberhalb des Glaspunktes der Polyolefine vermischt werden.

### Beispiele

Zur Bewertung der Verklebbarkeit wurden die folgenden Kunststoffe untersucht:
a) Polyethylen: Lupolen H 1800 (BASF)
b) Polypropylen: Hostalen PPH 1050 (Hoechst)

### Extrusionsbedingungen:

Polymerisationsinitiator und Polyolefingranulat wurden innig miteinander vermischt und anschließend in einem Doppelschneckenkneter (Brabender Plasticorder PL2000) mit einem Schneckendurchmesser von 41.8 mm und einer Schneckenlänge von 7D extrudiert. Als Austrittsöffnung wurde ein Schlitzdüse (0,5 mm hoch, 50 mm breit) benutzt. Für sämtliche weiteren Untersuchungen wurden die erhaltenen Bänder benutzt.

### Zugscherversuche:

Die Zugscherversuche wurden mit Geräten der Fa. Zwick durchgeführt. Die aus der Extrusion erhaltenen Polyolefinbänder (0,55 mm hoch, 40 mm breit) wurden auf einer Fläche von 250 mm² mit Cyanacrylat (Pattex Sekundenkleber, Henkel) verklebt und zerrissen. Die in den Tabellen angegebenen Werte sind Durchschnittswerte aus 5 Einzelmessungen. Aufgrund der hohen Zugscherwerte kam es vor allem beim Polypropylen häufig zu Materialdehnungen oder Materialbruch.
- **Z1** =: Zugscherwert nach einem Tag (N/mm²)
- **Z2** =: Zugscherwert nach einer Woche/50°C Lagerung (N/mm²)
- **Z3** =: Zugscherwert nach zwei Wochen/50°C Lagerung (N/mm²)

**Tabelle 1:**

| Polypropylen | | | | |
|---|---|---|---|---|
| Additiv | Zugesetzte Menge (Gew.%) | **Z1** | **Z2** | **Z3** |
| ohne Zusatz | - | keine Haftung nicht verklebbar | keine Haftung nicht verklebbar | keine Haftung nicht verklebbar |
| 2-Phenylimidazolin | 0,5 | 1,66 | 1,32 | keine Haftung nicht verklebbar |
| 2-Phenylimidazolin | 0,1 | 1,17 | 1,26 | keine Haftung nicht verklebbar |
| DBU | 0,1 | 1,04 | 1,13 | 1,26 |
| DBN | 0,1 | 1,21 | 1,00 | 0,91 |

**Tabelle 2:**

| Polyethylen | | | | |
|---|---|---|---|---|
| Additiv | Zugesetzte Menge (Gew.%) | **Z1** | **Z2** | **Z3** |
| ohne Zusatz | - | 0,28 | 0,28 | 0,28 |
| 2-Phenylimidazolin | 0,1 | Materialdehnung Materialbruch | Materialdehnung Materialbruch | 0,28 |
| DBU | 0,05 | Materialdehnung Materialbruch | Materialdehnung Materialbruch | Materialdehnung Materialbruch |
| DBN | 0,5 | Materialdehnung Materialbruch | Materialdehnung Materialbruch | Materialdehnung Materialbruch |

## Patentansprüche

1. Polyolefinmassen, ausgewählt aus der Gruppe Polyethylen, Polypropylen, Poly(1-buten), Polyisobutylen, Poly(4-methyl-1-penten) sowie Copolymerisaten und Mischungen der genannten Polyolefine, mit verbesserter Verklebbarkeit, erhältlich durch Vermischen von mindestens 0,001 Gew.-% -bezogen auf das Polyolefin- eines oder mehrerer Polymerisationsinitiatoren mit dem Polyolefin bei Temperaturen oberhalb des Glaspunktes, **dadurch gekennzeichnet, daß** die Polymerisationsinitiatoren ausgewählt sind aus der Gruppe Imidazoline, Imidazolinone und Polyazapolycyclen und in der Lage sind, die Polymerisation von Monomeren der allgemeinen Formel (**I**) 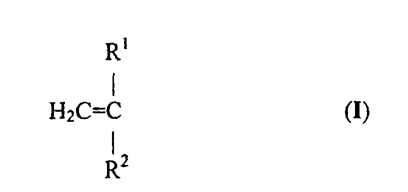 wobei R¹ für -CN oder COOR³; R² für -CN, Halogen oder COOR³ sowie R³ für Wasserstoff und/oder lineare oder verzweigte, gesättigte oder ungesättigte, gleiche oder unterschiedliche Alkylreste oder Cycloalkylreste mit 1 bis 22 C-Atomen oder Phenylreste stehen,
zu initiieren.

2. Polyolefinmassen gemäß Anspruch 1, wobei die Polymerisation eine ionische Polymerisation ist.

3. Polyolefinmassen nach Anspruch 1 oder 2, **dadurch gekennzeichnet, daß** sie Polymerisationsinitiatoren ausgewählt aus der Gruppe 2-Phenylimidazolin, 1,8-Diazabicyclo(5.4.0)undec-7-en (DBU) und 1,5-Diazabicyclo(4.3.0)non-5-en (DBN) enthalten.

4. Polyolefinmassen nach einem der Ansprüche 1 bis 3, **dadurch gekennzeichnet, daß** sie die Polymerisationsinitiatoren in einer Menge von 0,005 bis 20 Gew.-% -bezogen auf das Polyolefin- enthalten.

5. Polyolefinmassen nach einem der Ansprüche 1 bis 4, **dadurch gekennzeichnet, daß** sie die Polymerisationsinitiatoren in einer Menge von 0,005 bis 10 Gew.-% - bezogen auf das Polyolefin - enthalten.

6. Verfahren zur Verbesserung der Verklebbarkeit von Polyolefinen, ausgewählt aus der Gruppe Polyethylen, Polypropylen, Poly(1-buten), Polyisobutylen, Poly(4-methyl-1-penten) sowie Copolymerisaten und Mischungen der genannten Polyolefine, **dadurch gekennzeichnet, daß** Polyolefinmassen mit mindestens 0,001 Gew.-% -bezogen auf das Polyolefin- eines oder mehrerer Polymerisationsinitiatoren, ausgewählt aus der Gruppe Imidazoline, Imidazolinone und Polyazapolycyclen, die in der Lage sind, die - insbesondere ionische - Polymerisation von Monomeren der allgemeinen Formel (**I**) 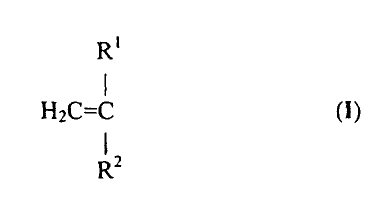 wobei R¹ für -CN oder COOR³; R² für -CN, Halogen oder COOR³ sowie R³ für lineare oder verzweigte, gesättigte oder ungesättigte, gleiche oder unterschiedliche Alkylreste oder Cycloalkylreste mit 1 bis 22 C-Atomen oder Phenylreste stehen,zu initiieren, bei Temperaturen oberhalb des Glaspunktes vermischt werden.

7. Verfahren nach Anspruch 6, **dadurch gekennzeichnet, daß** die Komponenten co-extrudiert oder co-injiziert werden.

8. Formkörper oder Folien mit verbesserter Verklebbarkeit auf Polyolefinbasis, **dadurch gekennzeichnet, daß** sie Polyolefine gemäß Anspruch 1 enthalten.

9. Verwendung von 2-Phenylimidazolin, 1,8-Diazabicyclo(5.4.0)undec-7-en (DBU) und/oder 1,5-Diazabicyclo(4.3.0)non-5-en (DBN) als Polymerisationsinitiatoren zur Herstellung von Polyolefinen, ausgewählt aus der Gruppe Polyethylen, Polypropylen, Poly(1-buten), Polyisobutylen, Poly(4-methyl-1-penten) sowie Copolymerisaten und Michungen der genannten Polyolefine, mit verbesserter Verklebbarkeit durch Polyacrylate, erhältlich aus Monomeren der allgemeinen Formel (**I**) 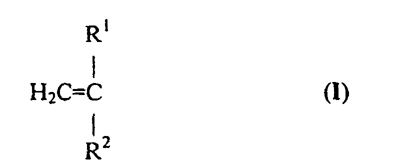 wobei R¹ für -CN oder COOR³; R² für -CN, Halogen oder COOR³ sowie R³ für Wasserstoff und/oder lineare oder verzweigte, gesättigte oder ungesättigte, gleiche oder unterschiedliche Alkylreste oder Cycloalkylreste mit 1 bis 22 C-Atomen oder Phenylreste stehen, **dadurch gekennzeichnet, daß** die Polymerisationsinitiatoren und die Polyolefine bei Temperaturen oberhalb des Glaspunktes der Polyolefine vermischt werden.

## Claims

1. Polyolefin compositions with improved bondability selected from the group consisting of polyethylene, polypropylene, poly(1-butene), polyisobutylene, poly(4-methyl-1-pentene) and copolymers and mixtures thereof and obtainable by mixing at least 0.001% by weight, based on the polyolefin, of one or more polymerization initiators with the polyolefin at temperatures above the glass transition temperature, **characterized in that** the polymerization initiators are selected from the group consisting of imidazolines, imidazolinones and polyazapolycycles and are capable of initiating the polymerization of monomers corresponding to general formula **(I)**: 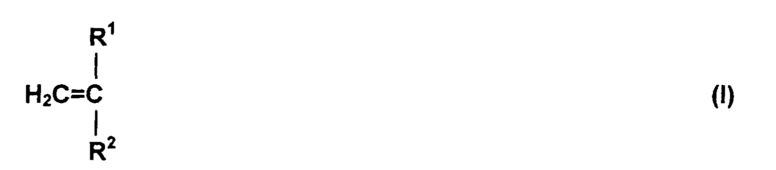 in which R¹ represents -CN or COOR³, R² represents -CN, halogen or COOR³ and R³ represents hydrogen and/or linear or branched, saturated or unsaturated, like or different alkyl groups or cycloalkyl groups containing 1 to 22 carbon atoms or phenyl groups.

2. Polyolefin compositions as claimed in claim 1, **characterized in that** the polymerization is an ionic polymerization.

3. Polyolefin compositions as claimed in claim 1 or 2, **characterized in that** the polymerization initiators are selected from the group consisting of 2-phenyl imidazoline, 1,8-diazabicyclo(5.4.0)undec-7-ene (DBU) and 1,5-diazabicyclo(4.3.0)non-5-ene (DBN).

4. Polyolefin compositions as claimed in any of claims 1 to 3, **characterized in that** they contain the polymerization initiators in a quantity of 0.005 to 20% by weight, based on the polyolefin.

5. Polyolefin compositions as claimed in any of claims 1 to 4, **characterized in that** they contain the polymerization initiators in a quantity of 0.005 to 10% by weight, based on the polyolefin.

6. A process for improving the bondability of polyolefins selected from the group consisting of polyethylene, polypropylene, poly(1-butene), polyisobutylene, poly(4-methyl-1-pentene) and copolymers and mixtures thereof, **characterized in that** polyolefin compositions are mixed with at least 0.001% by weight, based on the polyolefin, of one or more polymerization initiators which are capable of initiating the polymerization, more particularly the ionic polymerization, of monomers corresponding to general formula **(I)**: 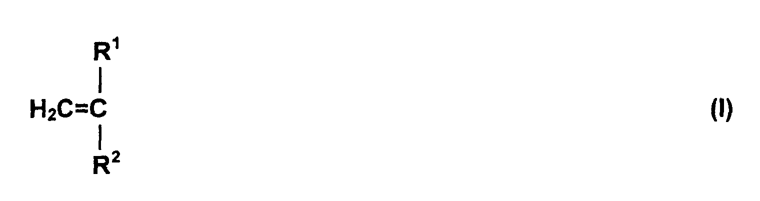 in which R¹ represents -CN or COOR³, R² represents -CN, halogen or COOR³ and R³ represents hydrogen and/or linear or branched, saturated or unsaturated, like or different alkyl groups or cycloalkyl groups containing 1 to 22 carbon atoms or phenyl groups,
at temperatures above the glass transition temperature.

7. A process as claimed in claim 6, **characterized in that** the components are co-extruded or co-injected.

8. Polyolefin-based moldings or films with improved bondability, **characterized in that** they contain the polyolefins claimed in claim 1.

9. The use of 2-phenyl imidazoline, 1,8-diazabicyclo(5.4.0)undec-7-ene (DBU) and/or 1,5-diazabicyclo(4.3.0)non-5-ene (DBN) as polymerization initiators for the production of polyolefins with improved bondability by polyacrylates selected from the group consisting of polyethylene, polypropylene, poly(1-butene), polyisobutylene, poly(4-methyl-1-pentene) and copolymers and mixtures thereof and obtainable from monomers corresponding to general formula **(I)**: 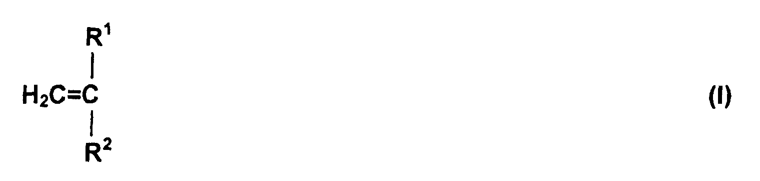 in which R¹ represents -CN or COOR³, R² represents -CN, halogen or COOR³ and R³ represents hydrogen and/or linear or branched, saturated or unsaturated, like or different alkyl or cycloalkyl groups containing 1 to 22 carbon atoms or phenyl groups, **characterized in that** the polymerization initiators and the polyolefins are mixed at temperatures above the glass transition temperature of the polyolefins.

## Revendications

1. Masses de polyoléfines choisis dans le groupe du polyéthylène, du polypropylène, du poly(1-butène), du polyisobutylène, du poly(4-méthyl 1-pentène) ainsi que des co-polymérisats et des mélanges des polyoléfines mentionnés ayant une adhésivité améliorée, accessibles par mélange d'au moins 0,001% en poids rapporté à la polyoléfine, d'un ou plusieurs amorceurs de polymérisation à des températures au-dessus du point de vitrification,
**caractérisées en ce que**
les amorceurs de polymérisation sont choisis dans le groupe des imidazolines, des imidazolinones et des polyazapolycyclènes et qui sont en mesure de déclencher la polymérisation de monomères de formule générale (I) 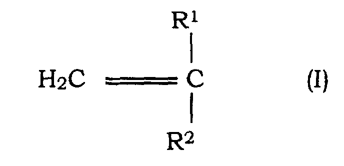 dans laquelle R¹ représente -CN ou COOR³, R² représente CN, un halogène ou COOR³ ainsi que R³ représente de l'hydrogène et/ou des restes alkyle linéaires ou ramifiés, saturés ou non saturés, identiques ou différents ou des restes cycloalkyle ayant de 1 à 22 atomes de carbone ou des restes phényle.

2. Masses de polyoléfine conformément à la revendication 1,
dans lesquelles la polymérisation est une polymérisation ionique.

3. Masses de polyoléfine selon la revendication 1 ou la revendication 2,
**caractérisées en ce qu'**
elles contiennent des amorceurs de polymérisation choisis dans le groupe de la 2-phénylimidazoline, du 1,8-diazabicyclo (5.4.0) undec-7^{-ène} (DBU) et du 1,5-diazabicyclo (4.3.0) none-5^{-ène} (DBN).

4. Masses de polyoléfines selon l'une des revendications 1 à 3,
**caractérisées en ce qu'**
elles renferment les amorceurs de polymérisation en une quantité de 0,005 à 20% en poids, rapporté à la polyoléfine.

5. Masses de polyoléfine selon la revendication 4,
**caractérisées en ce qu'**
elles renferment les amorceurs de polymêrisation en une quantité de 0,005 à 10% en poids, rapporté à la polyoléfine.

6. Procédé d'amélioration de l'adhésivité de polyoléfines choisies dans le groupe du polyéthylène, du polypropylène, du poly(1-butylène), du polyisobutylène, du poly(4-méthyl 1-pentène) ainsi que de copolymérisats et de mélanges des dites polyoléfines,
**caractérisé en ce que**
des masses de polyoléfines ayant au moins 0,001% en poids rapporté à la polyoléfine - d'un ou plusieurs amorceurs de polymérisation choisis dans le groupe de l'imidazoline, de l'imidazolinone, et des polyazapolycyclènes qui sont en mesure - en particulier les ioniques de déclencher une polymérisation de monomères de formule générale (I) 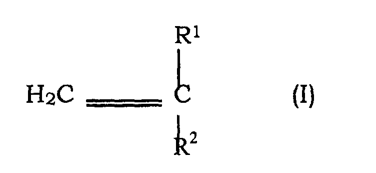 dans laquelle R¹ représente -CN ou COOR³, R² représente -CN un halogène ou COOR³ ainsi que R³ représente de l'hydrogène et/ou des restes alkyle linéaires ou ramifiés, saturés ou non saturés identiques ou différents ou des restes cycloalkyle ayant de 1 à 22 atomes de carbone ou des restes phényle,
sont pour être amorcées mélangées à des températures au-dessus du point de vitrification de la polyoléfine.

7. Procédé selon la revendication 6,
**caractérisé en ce que**
les composants sont co-extrudés ou co-injectés.

8. Solides moulés ou films ayant une adhésivité améliorée à base de polyoléfine,
**caractérisés en ce qu'**
ils contiennent des polyoléfines conformément à la revendication 1.

9. Utilisation de la 2-phenylimidazoline, du 1,8-diazabicyclo-(5.4.0)-undec - 7ène (DBU), et/ou du 1,5 - diazabicyclo (4.3.0)-none-5ène (DBN) comme amorceurs de polymérisation, en vue de la production de polyoléfines choisies dans le groupe du polyéthylène, du polypropylène, du poly(1-butène), du polysobutylène, du poly(4-méthyl-1-pentène) ainsi que de copolymérisats et de mélanges des dites polyoléfines ayant une adhésivité améliorée par des polyacrylates, accessible à partir de monomères de formule générale (I) 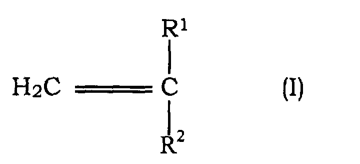 dans laquelle R¹ représente -CN ou COOR³, R² représente -CN, un halogène ou COOR³, ainsi que R³ représente de l'hydrogène et/ou des restes alkyle linéaires ou ramifiés, saturés ou non saturés identiques ou différents ou des restes cycloalkyle ayant de 1 à 22 atomes de carbone ou des restes phényle,
**caractérisée en ce que**
les amorceurs de polymérisation et les polyoléfines sont mélangés à des températures au-dessus du point de vitrification des polyoléfines.
